# EUROPEAN PATENT APPLICATION

(11) **EP 2 511 156 A1**
(43) Date of publication of application: **17.10.2012**
(21) Application number: 10835748.4
(22) Date of filing: 27.08.2010
(51) Int. Cl.: B62D 5/04, G01L 3/10

(54) **METHOD OF MANUFACTURING MOTORIZED POWER STEERING DEVICE**

(30) Priority: 08.12.2009 JP 2009278862
(71) Applicant: Honda Motor Co., Ltd., Minato-ku Tokyo 107-8556 (JP)
(72) Inventor: YONEDA, Atsuhiko, Wako-shi Saitama 351-0193 (JP); SHIMIZU, Yasuo, Wako-shi Saitama 351-0193 (JP)
(74) Representative: Herzog, Markus
(86) International application number: PCT/JP2010/064600
(87) International publication number: WO 2011/070826

(57) **Abstract**

Disclosed is a method of manufacturing a motorized power steering device wherein auxiliary torque generated by an electric motor (43) is added to a rotation shaft (24) via a speed reduction mechanism (44). This manufacturing method comprises a shaft mounting process wherein the rotation shaft (24) is rotatably mounted in a housing (51), and a speed reduction mechanism installing process wherein subsequent to the mounting of the shaft, the speed reduction mechanism (44) is installed on the rotation shaft (24).

## Description

### TECHNICAL FIELD

The present invention relates to a method of manufacturing a motorized power steering device installed in a vehicle.

### BACKGROUND ART

A motorized power steering device is a device for reducing a steering load of a driver, wherein a steering torque transmitted to a rotation shaft from a steering wheel is detected by a steering torque sensor, and an additional torque generated by an electric motor in accordance with the detected steering torque is transmitted to the rotation shaft via a speed reduction mechanism. Such motorized power steering device and the manufacturing method thereof are known, as is disclosed in Patent Documents 1 through 3, for example.

The motorized power steering devices disclosed in Patent Document 1 and Patent Document 2 each comprise an input shaft connected to the steering wheel, an output shaft connected to a rack-and-pinion mechanism, a torsion bar connecting the input and output shafts together, the steering torque sensor for detecting steering torque corresponding to a relative torsion angle between the input and output shafts, the electric motor for generating the additional torque in accordance with the steering torque, and the speed reduction mechanism for transmitting the additional torque to the output shaft. The speed reduction mechanism comprises a worm gear mechanism composed of a worm provided to a motor shaft of the electric motor, and a worm wheel mounted to the output shaft.

The general assembly procedure of the motorized power steering device disclosed in Patent Document 1 is as follows. A side of the output shaft connected to the rack-and-pinion mechanism is referred to as "below the output shaft."

First, the worm wheel and a first bearing adjacent to the worm are press-fitted to the output shaft from below the output shaft.

Next, to prevent the worm wheel and the first bearing from dropping out from the output shaft, a crimp ring is inserted over the output shaft from below the output shaft and crimped.

Next, the input shaft, the output shaft, the torsion bar, the steering torque sensor, the worm wheel, and other components are assembled to become a "partial assembly" (including adjusting a neutral position of the steering torque sensor).

A second bearing is mounted in advance on a bottom end of a housing for accommodating the partial assembly. Next, the partial assembly is inserted into the housing through an opening in a top end of the housing. A bottom end part of the output shaft fits with the second bearing, and the first bearing fits with the housing.

Next, a nut is inserted into the housing through an opening in the bottom end of the housing, and this nut is screwed onto the bottom end of the output shaft. The output shaft and the second bearing can thereby be set. As a result, the housing can support the output shaft via the first and second bearings.

Next, the opening in the bottom end of the housing is closed by a cap.

Finally, the worm and the electric motor are installed, and the steering torque sensor and a lid are installed in the housing, thus completing the assembly work.

However, in the method of manufacturing the motorized power steering device described in Patent Document 1, since there are many components and many assembly steps, there is room for improvement in increasing productivity.

In contrast to this, in the motorized power steering device described in Patent Document 2, all of the configurational components can be accommodated and mounted in the housing from one side of the housing. The assembly procedure of the motorized power steering device described in Patent Document 2 is as follows.

First, the worm wheel and the first bearing are mounted in advance on the rotation shaft, and the second bearing is mounted in advance on the bottom end of the housing. A working opening is opened through the axial direction in the worm wheel.

Next, a stopper ring (a fixing member) for fixing an outer ring of the first bearing to the housing is inserted into the housing through the opening in the top end of the housing, and is temporarily disposed near the position where the worm wheel is disposed.

Next, a pinching tool is inserted into the working opening of the worm wheel, and a distal end of the pinching tool catch on a work hole of the stopper ring to shorten the diameter of the stopper ring.

Next, the rotation shaft on which the worm wheel and the first bearing are installed is inserted through the opening in the top end of the housing. The bottom end part of the output shaft is fitted with the second bearing, and the first bearing is fitted with the housing.

Next, the position of the stopper ring is matched with the position of a stopper ring fitting groove of the housing, and the pinching tool is then removed from the work hole of the stopper ring.

The work of installing the rotation shaft in the housing is thereby completed.

However, in the method of manufacturing the motorized power steering device described in Patent Document 2, when the rotation shaft, the bearings, and the stopper ring are mounted in the housing, these members and mounting positions are blocked by the worm wheel, and therefore cannot be sufficiently observed by a worker. Moreover, since the pinching tool is operated through the working opening of the worm wheel, the installation work requires a high degree of expertise. Therefore, this is further room for improvement in increasing productivity.

In contrast, in the motorized power steering device described in Patent Document 3, the steering torque sensor is constituted of a magnetostrictive torque sensor. Therefore, the rotation shaft has a magnetostrictive film, the magnetic characteristics of which change due to the steering torque applied to the rotation shaft. In the motorized power steering device described in Patent Document 3 as well, all of the configurational components can be accommodated and mounted in the housing through one side of the housing. Moreover, the rotation shaft and a bearing fitted with the rotation shaft are disposed in a fixed position in the housing, and when an outer ring of this bearing is fixed to the housing by the fixing member (the stopper ring or the like), these members and mounting positions are blocked by the worm wheel and therefore cannot be sufficiently observed by the worker. There is further room for improvement in increasing productivity.

### PRIOR ART LITERATURE

### PATENT DOCUMENT

[Patent Document 1] Japanese Patent Application Laid-Open Publication No. 9-309447(JP-A H9-309447) (see FIGS. 9 and 10)
[Patent Document 2] Japanese Patent Application Laid-Open Publication No. 11-105721(JP-A H11-105721) (see FIGS. 1 through 3)
[Patent Document 3] Japanese Patent Application Laid-Open Publication No. 2008-58108 (JP-A 2008-58108)(see FIGS. 3 and 8)

### SUMMARY OF INVENTION

### TECHNICAL PROBLEM

An objective of the present invention is to provide a technique whereby the productivity of a motorized power steering device can be increased.

### SOLUTION TO PROBLEM

According to a first aspect of the present invention, there is provided a method of manufacturing a motorized power steering device, wherein a steering torque transmitted from a steering wheel to a rotation shaft is detected by a steering torque sensor when the steering wheel is steered, and an additional torque generated by an electric motor in accordance with the detected steering torque is transmitted to the rotation shaft via a speed reduction mechanism, the method of manufacturing the motorized power steering device comprising a shaft mounting step for rotatably mounting the rotation shaft in a housing having a top part opening, and a speed reduction mechanism installing step for installing the speed reduction mechanism on the rotation shaft subsequent to the shaft mounting step

According to a second aspect of the present invention, the shaft mounting step includes a bearing setting step for fitting an inner ring of a bearing to a fixed position of the rotation shaft, a shaft setting step for inserting the rotation shaft and the bearing into the housing and disposing the rotation shaft and bearing in an interior fixed position in the housing, and a bearing fixing step for fixing an outer ring of the bearing to the housing.

According to a third aspect of the present invention, the bearing fixing step is a step for fixing the outer ring of the bearing to the housing by the installation, in the housing, of a bearing fixing member disposed so as to be adjacent to an end surface of the outer ring of the bearing facing toward the top part opening of the housing, is installed in the housing, whereby the outer ring of the bearing is fixed to the housing.

According to a fourth aspect of the present invention, the bearing fixing member is a member installed in the housing by being fitted with a fitting part formed in the housing.

According to a fifth aspect of the present invention, the fitting part is a fitting groove formed in the housing, and the bearing fixing member is a stopper ring which fits with the fitting groove.

According to a sixth aspect of the present invention, the bearing fixing member is a locknut installed in the housing by being screwed into a female screw formed in the housing.

According to a seventh aspect of the present invention, the steering torque sensor is a magnetostrictive torque sensor having magnetostrictive parts in which magnetic characteristics change due to the steering torque applied to the rotation shaft, wherein a magnetostrictive part setting step for providing the magnetostrictive parts to the rotation shaft is performed before the shaft mounting step.

### ADVANTAGEOUS EFFECTS OF INVENTION

In the invention according to the first aspect, when the rotation shaft is rotatably mounted in the housing, the speed reduction mechanism has not been installed on the rotation shaft. The worker can perform the installation work while sufficiently observing the position where the rotation shaft is mounted on the housing. Therefore, since the installation work can be performed easily and quickly, workability can be increased. As a result, the productivity of the motorized power steering device can be increased.

In the invention according to the second aspect, the inner ring of the bearing is fitted in a fixed position of the rotation shaft, the rotation shaft and the bearing are then inserted in the housing and disposed in an internal fixed position in the housing, and the outer ring of the bearing is then fixed to the housing. The speed reduction mechanism is installed on the rotation shaft subsequent to these steps.

Therefore, the rotation shaft and the bearing fitted with the rotation shaft are disposed in a fixed position in the housing, and when the outer ring of the bearing is fixed to the housing by the bearing fixing member, the speed reduction mechanism has not been installed on the rotation shaft. When the rotation shaft, the bearing, and the bearing fixing member are mounted in the housing, the worker can perform the installation work while sufficiently observing these members and mounting positions. Consequently, since the installation work can be performed easily and quickly, workability can be increased. As a result, the productivity of the motorized power steering device can be increased.

In the invention according to the third aspect, during the bearing fixing step, the bearing fixing member, which is disposed so as to be adjacent to the end surface in the outer ring of the bearing that faces toward the top part opening of the housing, is installed in the housing. As a result, the outer ring of the bearing is fixed to the housing. Therefore, the worker can install the bearing fixing member in the housing from the opening side of the housing while sufficiently observing the bearing fixing member. Consequently, the work of installing the bearing in the housing using the bearing fixing member can be performed easily and quickly.

In the invention according to the fourth aspect, the bearing fixing member can be easily installed in the housing merely by fitting the bearing fixing member with the fitting part formed in the housing.

In the invention according to the fifth aspect, the installation work is simple, the stopper ring merely being fitted in the fitting groove formed in the housing.

In the invention according to the sixth aspect, the locknut can be easily installed in the housing, merely by screwing the locknut into the female screw formed in the housing.

In the invention according to the seventh aspect, a magnetostrictive torque sensor is used as the steering torque sensor, and a magnetostrictive parts of the magnetostrictive torque sensor are provided to the rotation shaft before the shaft mounting step is performed. The outside diameter of the magnetostrictive parts is extremely similar to the diameter of the rotation shaft. Therefore, the hole diameter of the component of the speed reduction mechanism that is installed on the rotation shaft can be just slightly larger than the diameter of the rotation shaft. Therefore, the diameter of the portion in the rotation shaft on which the component of the speed reduction mechanism is installed can be just slightly larger than the diameter of the other portions of the rotation shaft. Consequently, the material used when the rotation shaft is manufactured may be thin. Thereby, only a small amount of the material need be used. Productivity is improved. With this structure, after the shaft mounting step has been performed, the component of the speed reduction mechanism can be inserted into the housing and installed in the fixed position of the rotation shaft from the direction in which the rotation shaft is inserted into the housing. Thus, the shaft mounting step and the speed reduction mechanism installing step can be performed from the same direction of the housing. As a result, the productivity of the motorized power steering device can be further increased.

### BRIEF DESCRIPTION OF DRAWINGS

FIG. 1 is a schematic view of a motorized power steering device according to Embodiment 1 of the present invention;
FIG. 2 is a schematic view of the motorized power steering device of FIG. 1;
FIG. 3 is an enlarged cross-sectional view taken along line 3-3 of FIG. 2;
FIG. 4 schematically illustrate a general arrangement of a rotation shaft shown in FIG. 3;
FIG. 5 illustrate the beginning steps of a method of manufacturing the motorized power steering device according to Embodiment 1;
FIG. 6 illustrate the ending steps of the method of manufacturing the motorized power steering device according to Embodiment 1;
FIG. 7 schematically illustrate a rotation shaft according to Embodiment 2;
FIG. 8 illustrate the beginning steps of a method of manufacturing a motorized power steering device according to Embodiment 2; and
FIG. 9 illustrate the ending steps of the method of manufacturing the motorized power steering device according to Embodiment 2.

### DESCRIPTION OF EMBODIMENTS

Certain preferred embodiments for carrying out the present invention are described below with reference to the accompanying drawings.

### [Embodiment 1]

A motorized power steering device and a manufacturing method thereof according to Embodiment 1 shall now be described.

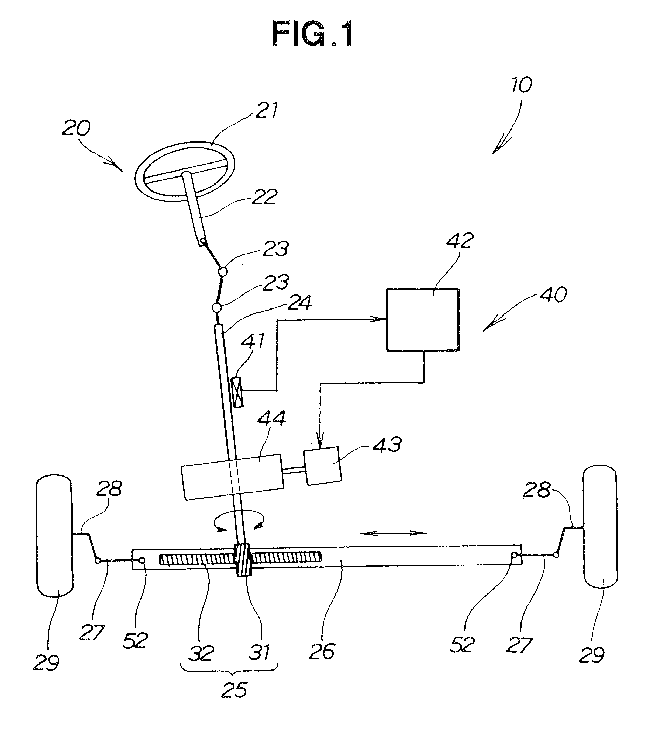

FIG. 1 schematically shows a motorized power steering device 10 according to Embodiment 1. The motorized power steering device 10 is comprised of a steering system 20 extending from a steering wheel 21 of a vehicle to steered wheels (front wheels) 29, 29 of the vehicle, and an auxiliary torque mechanism 40 for adding an auxiliary torque, i.e., an additional torque to the steering system 20.

In the steering system 20, a rotation shaft 24 (also referred to a pinion shaft or an input shaft) is connected to the steering wheel 21 via a steering shaft 22 and universal couplings 23, 23, a rack shaft 26 is connected to the rotation shaft 24 via a rack-and-pinion mechanism 25, and the left and right steered wheels 29, 29 are connected to both ends of the rack shaft 26 via left and right tie rods 27, 27 and knuckles 28, 28. The rack-and-pinion mechanism 25 is composed of a pinion 31 provided to the rotation shaft 24, and a rack 32 provided to the rack shaft 26.

According to the steering system 20, by steering the steering wheel 21, a driver can steer the steered wheels 29, 29 via the rack-and-pinion mechanism 25 through the steering torque.

In the auxiliary torque mechanism 40, a steering torque signal of the steering system 20 added to the steering wheel 21 is detected by a steering torque sensor 41, a control signal is generated by a controller 42 on the basis of the detected steering torque signal, an auxiliary torque (additional torque) corresponding to the steering torque is generated by an electric motor 43 on the basis of the control signal, the auxiliary torque is transmitted to the rotation shaft 24 via a speed reduction mechanism 44, and the auxiliary torque is further transmitted from the rotation shaft 24 to the rack-and-pinion mechanism 25 of the steering system 20.

The electric motor 43 is composed of a brushless motor, for example, and is equipped with a resolver or another rotation sensor. This rotation sensor is for detecting a motor rotation angle of a rotor in the electric motor 43.

The following is a description of a summary of the controller 42.

The controller 42 is constituted of a power source circuit, an electric current sensor for detecting a motor electric current, an input interface circuit, a microprocessor, an output interface circuit, an FET bridge circuit, and other components. The input interface circuit takes in the steering torque signal, a vehicle speed signal, a motor rotation signal, and the other signals from external sources. The microprocessor performs vector control on the electric motor 43 on the basis of the steering torque signal, the vehicle speed signal, and the other signals taken in by the input interface circuit. The output interface circuit converts an output signal of the microprocessor to a drive signal for the FET bridge circuit. The FET bridge circuit is a switching element for supplying three-phase AC electric current to the electric motor 43 (a brushless motor).

Such the controller 42 performs vector control on the basis of the motor rotation signal of the rotor of the electric motor 43 detected by the rotation sensor, and an electric current signal detected by the motor electric current sensor (provided to the controller 42). This vector control, which is a d-q control, performs DC control on a q-axis electric current for controlling the torque of the electric motor 43 and on a d-axis electric current for controlling a magnetic field.

In other words, the controller 42 sets a target q-axis electric current and a target d-axis electric current on the basis of the steering torque signal detected by the steering torque sensor 41, the vehicle speed signal detected by a vehicle speed sensor (not shown), the motor rotation signal of the rotor detected by the rotation sensor, and the other signal.

The controller 42 then performs PI control so that an actual q-axis electric current and an actual d-axis electric current, which have undergone d-q conversion, are matched to the target q-axis electric current and the target d-axis electric current, on the basis of the motor rotation signal of the rotor detected by the rotation sensor and the electric current signal detected by the motor electric current sensor.

According to the motorized power steering device 10, the steered wheels 29, 29 can be steered through the rack shaft 26 by composite torque resulting from the auxiliary torque (additional torque) of the electric motor 43 being added to the steering torque of the driver.

The speed reduction mechanism 44 is constituted of a worm gear mechanism, for example. The speed reduction mechanism 44 is alternatively referred to as a "worm gear mechanism 44," as appropriate.

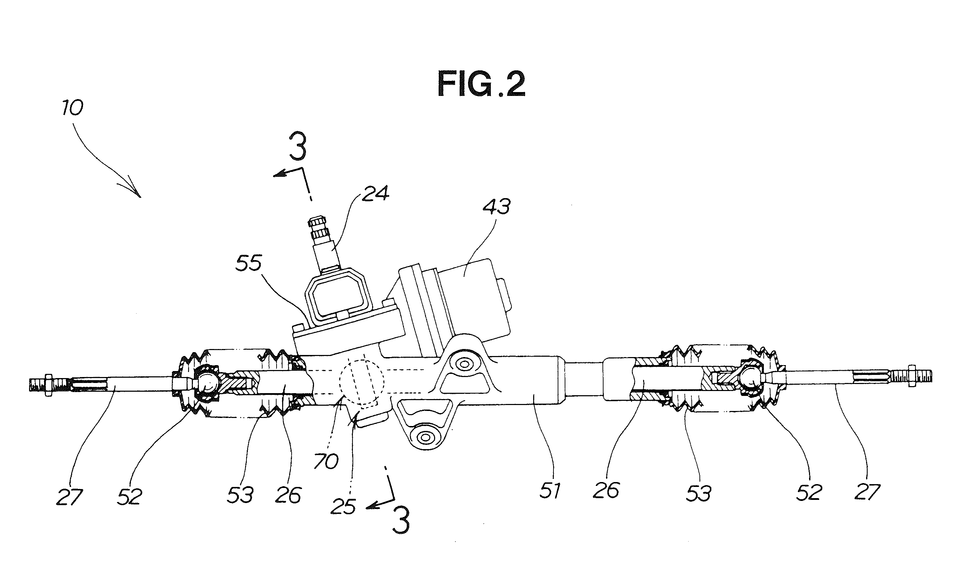

FIG. 2 shows the overall configurations of the motorized power steering device according to Embodiment 1, wherein the left end part and the right end part are depicted as being fractured. As shown in FIG. 2, the rack shaft 26 is accommodated to be capable of sliding in an axial direction within a housing 51 extending in a vehicle width direction (the left-right direction of FIG. 2). The tie rods 27, 27 are connected to the rack shaft 26 via ball joints 52, 52 at the longitudinal-direction ends protruding from the housing 51. Both end parts of the rack shaft 26 are covered by dust seal boots 53, 53.

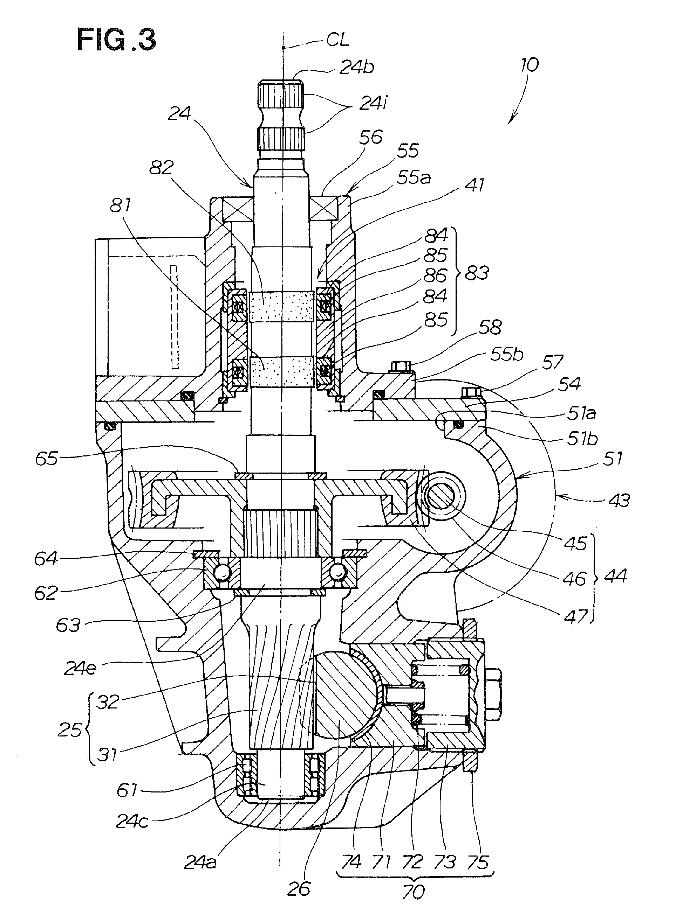

The housing 51 accommodates the bottom half of the rotation shaft 24, the rack-and-pinion mechanism 25, and the worm gear mechanism 44, and a sensor housing 55 is mounted via a middle fixing member 54 in a top part opening 51a formed in the top end of the housing, as shown in FIGS. 2 and 3. This type of housing 51 is closed off in the side opposite the top part opening 51a, i.e., in the bottom floor part.

A more detailed description shall be provided. The rotation shaft 24 is positioned so as to stand upright inside the housing 51; provided from one end 24a (the bottom end surface) to another end 24b (the top end surface) in the following order are a first bearing 61, the pinion 31, a second bearing 62, and two magnetostrictive parts 81, 82 in the steering torque sensor 41, as shown in FIG. 3.

While the rotation shaft 24 is in a state of being mounted inside the housing 51, the top half of the rotation shaft 24 extends from the top part opening 51a upward through the sensor housing 55. The two magnetostrictive parts 81, 82 are positioned in the sensor housing 55.

The rotation shaft 24 is rotatably supported via the first bearing 61 and the second bearing 62 on the internal peripheral surface of the housing 51, as shown in FIG. 3. The first bearing 61 is composed of a needle bearing or another roller bearing, for example. The second bearing 62 is composed of a ball bearing or another roller bearing, for example. In other words, the bottom end portion of the rotation shaft 24 is rotatably supported by the housing 51 via the first bearing 61. A position between the pinion 31 and a worm wheel 47 in the middle portion of the rotation shaft 24 is rotatably supported in the housing 51 via the second bearing 62. The rotation shaft 24 is capable of moving in the axial direction relative to the first bearing 61 accommodated in the housing 51. In FIG. 3, CL is a center line (the axis) of the rotation shaft 24.

The middle fixing member 54 is a hollow plate-shaped member for positioning the sensor housing 55 relative to the housing 51. The sensor housing 55, which is for accommodating the steering torque sensor 41, is composed of a cylindrical main body 55a through which the rotation shaft 24 vertically passes, and a flat plate-shaped flange 55b formed in the bottom end of the main body 55a. The top part of the main body 55a is provided with an oil seal 56 for sealing the rotation shaft 24.

The middle fixing member 54 is laid over a flange 51b of the housing 51 in the top part opening 51a of the housing 51 and mounted by a bolt 57. The middle fixing member 54 is restrained from moving in a radial direction relative to the housing 51.

The flange 55b of the sensor housing 55 is laid over the top end surface of the middle fixing member 54 and mounted by a bolt 58. The sensor housing 55 is restrained from moving in the radial direction relative to the middle fixing member 54.

In FIG. 3, the electric motor 43 shown by the imaginary line has a motor shaft (not shown) which extends horizontally through the housing 51 from the surface of the sheet of FIG. 3 toward the reverse side of the sheet. The motor shaft is an output shaft connected to a worm shaft 45 of the worm gear mechanism 44. The worm shaft 45 comprises a worm 46 formed integrally. Both end parts of the worm shaft 45 are rotatably supported by the housing 51 via bearings.

The worm gear mechanism 44 is configured such that the driven-side worm wheel 47 is meshed with the drive-side worm 46, whereby torque is transmitted from the worm 46 to the load side via the worm wheel 47.

The housing 51 comprises a rack guide 70. The rack guide 70 is composed of a guide part 71 which contacts the rack shaft 26 from the opposite side of the rack 32, an adjustment bolt 73 for pushing the guide part 71 via a compression spring 72, a contact member 74 which allows the back surface of the rack shaft 26 to slide, and a locknut 75 for positioning the adjustment bolt 73.

The steering torque sensor 41 is a magnetostrictive torque sensor composed of the rotation shaft 24, the pair of top and bottom magnetostrictive parts 81, 82 provided to the surface of the rotation shaft 24 and having magnetostrictive characteristics (magnetic characteristics) that change in accordance with the steering torque, and coils 85, 85 which are disposed in proximity to the magnetostrictive parts 81, 82 and which detect magnetostrictive effects occurring in the magnetostrictive parts 81, 82.

In other words, the steering torque sensor 41 is composed of the pair of magnetostrictive parts 81, 82 provided to the rotation shaft 24, and a detector 83 provided to the peripheries of the magnetostrictive parts 81, 82.

The magnetostrictive parts 81, 82 are composed of magnetostrictive films to which residual strain in mutually opposite directions is endowed in the axial longitudinal direction of the rotation shaft 24, for example. The magnetostrictive parts 81, 82 are hereinbelow alternatively referred to as the "magnetostrictive films 81, 82," as appropriate.

The magnetostrictive parts 81, 82 are films composed of a material which undergoes a large change in magnetic flux density in accordance with changes in strain, and are Ni-Fe based alloy films formed by vapor plating on the external peripheral surface of the rotation shaft 24, for example. The thickness of these alloy films is preferably about 30 to 50 µm. The thickness of the alloy films may also be less than or greater than this range. The magnetostrictive direction of the second magnetostrictive film 82 is different from the magnetostrictive direction of the first magnetostrictive film 81 (the films have magnetostrictive anisotropy). Thus, the two magnetostrictive films 81, 82 are films of approximately constant width and constant thickness formed over the entire external peripheral surface of the rotation shaft 24. The two magnetostrictive films 81, 82 are aligned a predetermined gap apart in the axial longitudinal direction.

In a case in which the Ni-Fe based alloy films contain approximately 50 wt% of Ni, the magnetostrictive effect thereof tends to increase because the magnetostrictive constant is high, and it is preferable to use a material with such a Ni content. The material used as the Ni-Fe based alloy films contains 50 to 70 wt% of Ni, and the remainder is Fe, for example.

The magnetostrictive films 81, 82 may be ferromagnetic films, and are not limited to Ni-Fe based alloy films. For example, the magnetostrictive films 81, 82 may be Co-Fe based alloy films or Sm-Fe based alloy films.

The detector 83, which electrically detects the magnetostrictive effect occurring in the magnetostrictive films 81, 82 and outputs a detection signal thereof as a torque detection signal, is accommodated in the sensor housing 55. This detector 83 is composed of a pair of top and bottom cylindrical coil bobbins 84, 84 through which the rotation shaft 24 passes, the coils 85, 85 wound numerous times respectively around the coil bobbins 84, 84, and a yoke 86 having magnetism for accommodating the coil bobbins 84, 84, and the coils 85, 85.

The coils 85, 85 are disposed so as to encircle the rotation shaft 24. The coil bobbins 84, 84, and the coils 85, 85 are surrounded by the yoke 86. The yoke 86 is a back yoke for a magnetic shield (a coil yoke forming a magnetic path) surrounding the peripheries of the pair of coils 85, 85.

The gaps between the magnetostrictive films 81, 82 and the coil bobbins 84, 84 are set to a range of about 0.5 to 1 mm. The coils 85, 85 are excited at an appropriate frequency in a range of 1 to 100 kHz, e.g., at about 10 kHz, and the magnetic permeability between the coils 85, 85 and the magnetostrictive parts 81, 82 endowed with anisotropy is detected.

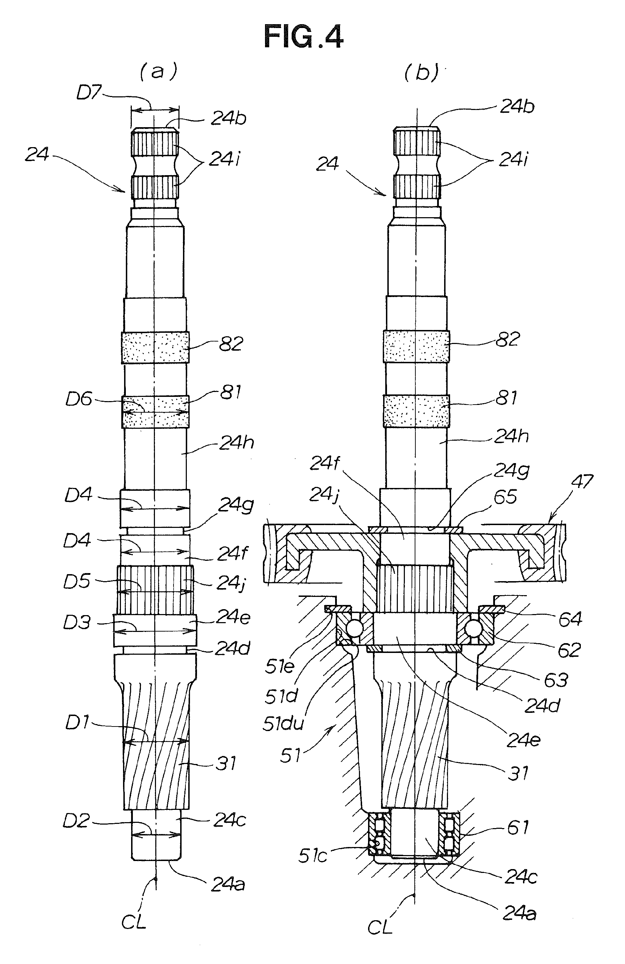

Next, the rotation shaft 24 will be described in detail. FIG. 4(a) shows the rotation shaft 24 shown in FIG. 3. FIG. 4(b) shows a state in which the first bearing 61, the second bearing 62, and the worm wheel 47 are mounted on the rotation shaft 24.

Formed in the internal peripheral surface of the housing 51, as shown in FIG. 4(b), are a bottom bearing hole 51c positioned in the lowest part in order to fit with the first bearing 61, a middle bearing hole 51d positioned in the middle in order to fit with the second bearing 62, and a stopper ring fitting groove 51e adjacent to the axial-direction top end of the middle bearing hole 51d (the top end in proximity to the second bearing 62) in order to fit with a second stopper ring 64. The axial-direction bottom end of the middle bearing hole 51d has a ledge surface 51du.

The rotation shaft 24 is a solid shaft, wherein aligned from one end 24a (the bottom end surface) in the axial longitudinal direction to the other end 24b (the top end surface) in the following order are an underside supported part 24c, the pinion 31, a bottom stopper ring fitting groove 24d, a middle supported part 24e, a wheel attachment 24f, a top stopper ring fitting groove 24g, a magnetostrictive film disposed part 24h, and a connecting part 24i, and these components are aligned centered about the axis line CL of the rotation shaft 24, as shown in FIG. 4(a).

The underside supported part 24c, the pinion 31, the bottom stopper ring fitting groove 24d, the middle supported part 24e, the wheel attachment 24f, the top stopper ring fitting groove 24g, the magnetostrictive film disposed part 24h, and the connecting part 24i are all formed integrally on the rotation shaft 24.

The underside supported part 24c is a portion rotatably supported by the first bearing 61 disposed on the underside of the housing 51. The underside supported part 24c is fitted with an inner ring of the first bearing 61, and an outer ring of the first bearing 61 is fitted with the bottom bearing hole 51c of the housing 51.

The middle supported part 24e is a portion rotatably supported by the second bearing 62 disposed in a vertically middle position on the housing 51. The middle supported part 24e is fitted with an inner ring of the second bearing 62. An outer ring of the second bearing 62 is fitted with the middle bearing hole 51d of the housing 51. The bottom end surface in the outer ring of the second bearing 62 is positioned by the ledge surface 51du in the bottom end of the middle bearing hole 51d.

The bottom stopper ring fitting groove 24d is a portion to which a first stopper ring 63 is mounted for positioning the bottom end surface in the inner ring of the second bearing 62 fitted with the middle supported part 24e. The top end surface in the outer ring of the second bearing 62 is positioned by the second stopper ring 64 (a bearing fixing member 64), which is fitted with the stopper ring fitting groove 51e (a fitting part 51e or a fitting groove 51e) of the housing 51. Thus, both ends of the outer ring of the second bearing 62 are positioned and installed in the housing 51 by being pressed between the ledge surface 51du and the first stopper ring 63. The second stopper ring 64, which is disposed so as to be adjacent to one end of the outer ring of the second bearing 62 (the end near the top part opening 51a), is installed in the housing 51, whereby the outer ring of the second bearing 62 can be fixed to the housing 51.

The wheel attachment 24f, is a portion for restraining the relative rotation of the worm wheel 47 and mounting the worm wheel 47 by fitting, and part of the wheel attachment 24f has a rotation-stopping serration 24j. The top stopper ring fitting groove 24g is a portion to which a third stopper ring 65 is mounted for positioning the top end surface of the worm wheel 47 fitted with the wheel attachment 24f. The worm wheel 47 is pressed between the top end surface in the inner ring of the second bearing 62 and the third stopper ring 65, and is thereby restrained from moving in the axial longitudinal direction relative to the rotation shaft 24.

Thus, the rotation shaft 24 is restrained from moving in the axial longitudinal direction relative to the housing 51 by the second bearing 62, the first, second, and third stopper rings 63, 64, 65, and the worm wheel 47.

The magnetostrictive film disposed part 24h is formed into a perfectly circular (columnar) shape in cross section, and the first and second magnetostrictive films 81, 82 are placed on the external peripheral surface. In other words, the rotation shaft 24 has the first and second magnetostrictive films 81, 82 on its surface.

The connecting part 24i is a shaft end portion connected to the steering wheel 21 via the universal couplings 23, 23 and the steering shaft 22 shown in FIG. 1. The connecting part 24i is composed of serration for connecting the universal couplings 23, for example.

The first, second, and third stopper rings 63, 64, 65 are composed of circlips, C rings, or crimp rings, for example.

The diameter D2 of the underside supported part 24c is smaller than the outside diameter D1 of the pinion 31. The diameter D4 of the wheel attachment 24f is smaller than the diameter D3 of the middle supported part 24e. The outside diameter D5 of the serration 24j is smaller than the diameter D3 of the middle supported part 24e and larger than the diameter D4 of the wheel attachment 24f. The outside diameter D6 of the magnetostrictive film disposed part 24h and the magnetostrictive films 81, 82 is smaller than the diameter D4 of the wheel attachment 24f. The diameter D7 of the connecting part 24i is smaller than the diameter D6 of the magnetostrictive films 81, 82.

Thus, the respective diameters are set to have the relationship "D3 > D5 > D4 > D6 > D7." Therefore, the second bearing 62, the worm wheel 47, the first stopper ring 63, and the third stopper ring 65 can be fitted on the rotation shaft 24 from the other end 24b to the one end 24a of the rotation shaft 24. The diameters of the rotation shaft 24 are also set to have the relationship "D3 > D1 > D2."

Between the middle supported part 24e and the serration 24j, i.e., in the middle supported part 24e, a large-diameter part (a radially convex part) larger than the diameter D3 may be provided in the end near the other end 24b of the rotation shaft 24. In this case, the second bearing 62 is installed in the middle supported part 24e from the one end 24a side of the rotation shaft 24.

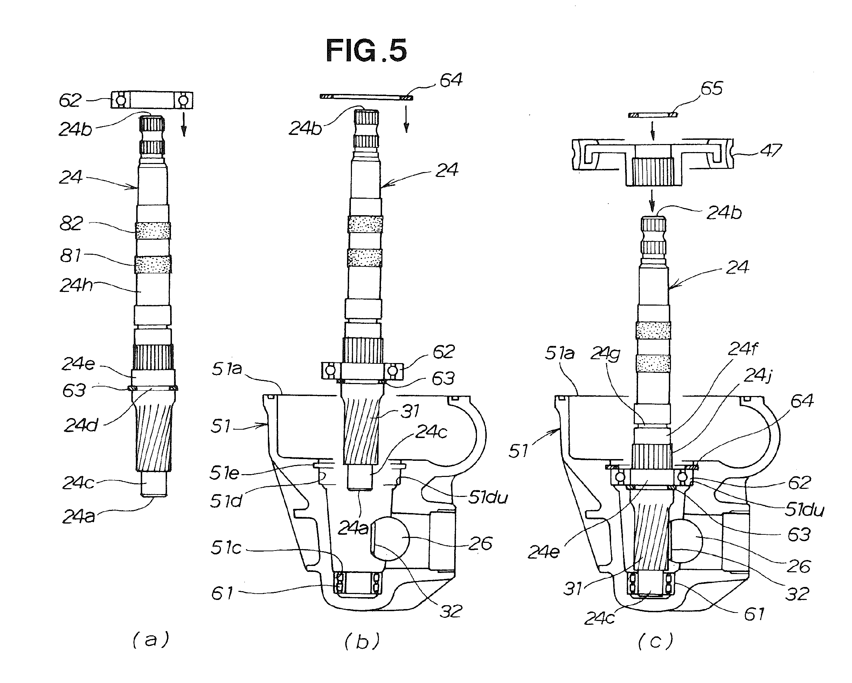

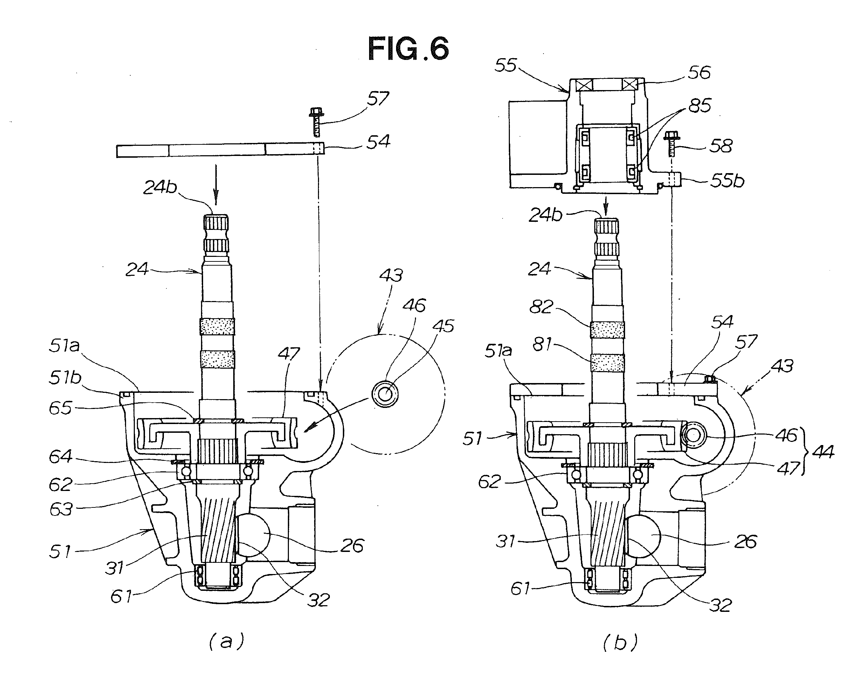

Next, the method of manufacturing the motorized power steering device 10 will be described on the basis of FIGS. 5 and 6.

First, the rotation shaft 24 is prepared as shown in FIG. 5(a), and the magnetostrictive films 81, 82 are placed on the rotation shaft 24 by plating, thermal spraying, sputtering, vapor deposition, adhesion, or another method (the magnetostrictive film forming step). The magnetostrictive films 81, 82 are thereby provided with firm adhesiveness to the external peripheral surface of the rotation shaft 24 with substantially uniform thickness. It shall be apparent that the adhesiveness of the magnetostrictive films 81, 82 on the rotation shaft 24 is improved by appropriately washing the magnetostrictive film disposed part 24h where the magnetostrictive films 81, 82 are formed in the rotation shaft 24 with an alkali, water, an acid, or the like after machine processing.

Next, the magnetostrictive films 81, 82 are endowed with anisotropy (anisotropy endowment step). Specifically, the magnetostrictive films 81, 82 are heated for several to several dozen seconds at approximately 300°C by a heat treatment such as high frequency induction heating, for example, while an external torque of about 50 to 100 Nm (the torque may be greater or less than this depending on the requirements) is applied. The magnetostrictive films 81, 82 are then cooled to room temperature. When the applied external torque then ceases from the magnetostrictive films 81, 82, anisotropy is endowed. In other words, input torque and external torque in the opposite direction are applied to the magnetostrictive films 81, 82 from the rotation shaft 24.

Thus, the direction of magnetostriction in the magnetostrictive films 81, 82 can be reliably and easily tilted in the opposite direction of the direction in which the external torque is applied. In other words, magnetostrictive anisotropy between the first magnetostrictive film 81 and the second magnetostrictive film 82 can be set.

The magnetostrictive film forming step and the anisotropy endowment step combined are referred to as the "magnetostrictive part setting step." The magnetostrictive films 81, 82 (magnetostrictive parts 81, 82) are provided to the rotation shaft 24 by performing the magnetostrictive part setting step.

Next, the first stopper ring 63 is fitted into and mounted in the bottom stopper ring fitting groove 24d of the rotation shaft 24, as shown in FIG. 5(a) (the first stopper ring attaching step).

Next, the second bearing 62 is inserted from the other end 24b of the rotation shaft 24 up to the position of the first stopper ring 63, as shown in FIG. 5(a). The second bearing 62 is mounted in the middle supported part 24e by pressure fitting (the second bearing attaching step, the bearing setting step). As a result, the second bearing 62 can be fitted and set (installed) in a fixed position on the rotation shaft 24.

Next, the first bearing 61 is mounted by being fitted with the bottom bearing hole 51c of the housing 51, as shown in FIG. 5(b) (the first bearing attaching step). As a result, the first bearing 61 is disposed in a fixed position in the housing 51. The first bearing attaching step may optionally be performed before the first stopper ring attaching step or the second bearing attaching step.

Next, the rotation shaft 24 is inserted from the side having the one end 24a into the housing 51 through the top part opening 51a, as shown in FIG. 5(b). The underside supported part 24c of the rotation shaft 24 is then fitted into the inner ring of the first bearing 61, and the second bearing 62 is fitted into the middle bearing hole 51d of the housing 51 (the shaft attaching step). Before this shaft attaching step is performed, the rack shaft 26 is installed in the housing 51 (the rack installing step). Therefore, the shaft attaching step is performed while the pinion 31 is meshed with the rack shaft 26.

Within the shaft attaching step, the step of inserting the rotation shaft 24 and the second bearing 62 into the housing 51 and disposing the rotation shaft 24 and second bearing 62 in internal fixed positions in the housing is referred to as the "shaft setting step."

Next, the second stopper ring 64 is inserted into the housing 51 through the top part opening 51a, as shown in FIG. 5(b). The second stopper ring 64 is fitted into and mounted in the stopper ring fitting groove 51e of the housing 51 (the second stopper ring attaching step, the bearing fixing step). As a result, the second bearing 62 is positioned relative to the housing 51. This installed state is shown in FIG. 5(c). In other words, both ends of the outer ring of the second bearing 62 are pressed between the ledge surface 51du and the second stopper ring 64 and thereby positioned and installed in the housing 51. Thus, the second stopper ring 64 disposed on one end side of the second bearing 62 is installed in the housing 51, whereby the outer ring of the second bearing 62 is fixed in the housing 51.

Here, the bearing setting step, the shaft setting step, and the bearing fixing step combined are referred to as the "shaft mounting step." In other words, this shaft mounting step is a step for rotatably mounting the rotation shaft 24 in the housing 51.

Next, as shown in FIG. 5(c), the worm wheel 47 is inserted onto the rotation shaft 24 from the other end 24b, and the fitting hole of the worm wheel 47 is fitted on the wheel attachment 24f, whereby the centers of the wheel attachment 24f and the worm wheel 47 are matched and the worm wheel 47 is connected to the serration 24j (the wheel attaching step, the speed reduction mechanism installing step). In other words, the worm wheel 47 as at least one part of the speed reduction mechanism 44 (FIG. 3) is installed on the rotation shaft 24. As a result, the worm wheel 47 is restrained from rotating relative to the rotation shaft 24, and the auxiliary torque generated by the motor 43 can therefore be transmitted from the worm wheel 47 to the rotation shaft 24. Thus, according to the speed reduction mechanism installing step, at least one part (the worm wheel 47) of the speed reduction mechanism 44 shown in FIG. 3 can be inserted into the housing 51 and installed in the fixed positions 24f, 24j of the rotation shaft 24 (the wheel attachment 24f and the serration 24j).

Next, the third stopper ring 65 is fitted and mounted in the top stopper ring fitting groove 24g of the rotation shaft 24, as shown in FIG. 5(c) (the third stopper ring attaching step). As a result, the worm wheel 47 is positioned and installed in the fixed positions 24f, 24j of the rotation shaft 24 (the wheel attachment 24f and the serration 24j). This installed state is shown in FIG. 6(a).

The rotation shaft 24 is positioned relative to the housing 51 by the second bearing 62, the first, second, and third stopper rings 63, 64, 65, and the worm wheel 47, and as a result, the rotation shaft 24 is restrained from moving in the axial longitudinal direction relative to the housing 51. Thus, the rotation shaft 24 is fixed in a fixed position in the housing 51 via the first and second bearings 61, 62.

Next, the worm 46 is inserted into the housing 51, combined with the worm wheel 47, and rotatably mounted in the housing 51, as shown in FIG. 6(a). The electric motor 43 is then installed in the housing 51 and the motor shaft of the electric motor 43 is connected to the worm shaft 45 (the speed reduction mechanism-motor assembling step).

Next, the middle fixing member 54 is laid over the flange 51b of the housing 51 and mounted by the bolt 57, as shown in FIG. 6(a) (the middle fixing member installing step). When the result is shown in FIG. 6(b), the top half of the rotation shaft 24 protrudes upward from the top part opening 51a.

Next, the sensor housing 55 in which the coils 85, 85 (the detector 83 shown in FIG. 3) have been installed in advance is inserted onto the rotation shaft 24 from the other end 24b, laid over the middle fixing member 54, and mounted by the bolt 58, as shown in FIG. 6(b) (the torque sensor assembling step). The result is shown in FIG. 3.

Next, the rack guide 70 is installed in the housing 51 as shown in FIG. 3 (the rack guide installing step). Finally, the tie rods 27, 27 are installed at both ends of the rack shaft 26, their peripheries are covered by the dust seal boots 53, 53, and the assembly work is completed, as shown in FIG. 2 (the rack shaft end treatment step).

The middle fixing member installing step, the torque sensor assembling step, the rack guide installing step, and the rack shaft end treatment step may be performed in any stage, provided that these steps are performed after the third stopper ring attaching step. The reason for this is because the rotation shaft 24 is mounted in the fixed position in the housing 51 via the first and second bearings 61, 62 by performing the third stopper ring attaching step. The rack installing step may also be performed after the third stopper ring attaching step is performed.

The description of Embodiment 1 above is summarized as follows.

In Embodiment 1, when the rotation shaft 24 is rotatably mounted in the housing 51, i.e., when the shaft mounting step is performed, the speed reduction mechanism 44 has not been installed on the rotation shaft 24. The worker can perform the installation work while sufficiently observing the position where the rotation shaft 24 is mounted on the housing 51. Therefore, since the installation work can be performed easily and quickly, workability can be increased. As a result, the productivity of the motorized power steering device 10 can be increased.

In Embodiment 1, the inner ring of the second bearing 62 is fitted in a fixed position of the rotation shaft 24 (the bearing setting step), the rotation shaft 24 and the second bearing 62 are then inserted in the housing 51 and disposed in an internal fixed position in the housing 51 (the shaft setting step), and the outer ring of the second bearing 62 is then fixed to the housing 51 (the bearing fixing step). The speed reduction mechanism 44 is installed on the rotation shaft 24 subsequent to these steps (the speed reduction mechanism installing step).

Thus, the rotation shaft 24 and the second bearing 62 fitted with the rotation shaft 24 are disposed in a fixed position in the housing 51, and when the outer ring of the second bearing 62 is fixed to the housing 51 by the bearing fixing member 64 (the second stopper ring 64), the speed reduction mechanism 44 has not been installed on the rotation shaft 24. When the rotation shaft 24, the second bearing 62, and the bearing fixing member 64 are mounted in the housing 51, the worker can perform the installation work while sufficiently observing these members and mounting positions. Therefore, since the installation work can be performed easily and quickly, workability can be increased. As a result, the productivity of the motorized power steering device 10 can be increased.

In Embodiment 1, during the bearing fixing step, the bearing fixing member 64, which is disposed so as to be adjacent to the end surface (the top end surface) in the outer ring of the second bearing 62 that faces toward the opening 51a (the top part opening 51a) of the housing 51, is installed in the housing 51. As a result, the outer ring of the second bearing 62 is fixed to the housing 51. Therefore, the worker can install the bearing fixing member 64 in the housing 51 from the opening 51a side of the housing 51 while sufficiently observing the bearing fixing member 64. Consequently, the work of installing the second bearing 62 in the housing 51 using the bearing fixing member 64 can be performed easily and quickly.

In Embodiment 1, the bearing fixing member 64 can be easily installed in the housing 51 merely by fitting the bearing fixing member 64 with the fitting part 51e formed in the housing 51.

In Embodiment 1, the bearing fixing member 64 is configured from a stopper ring. The installation work is simple, merely due to the stopper ring 64 being fitted in the fitting groove 51e formed in the housing 51.

In Embodiment 1, the steering torque sensor 41 is a magnetostrictive torque sensor, and the magnetostrictive parts 81, 82 are provided to the rotation shaft 24 before the bearing setting step is performed. The outside diameter D6 of the magnetostrictive parts 81, 82 is extremely similar to the diameters D1 to D5 and D7 of the rotation shaft 24, as shown in FIG. 4(a). Therefore, the hole diameter of the component 47 (the worm wheel 47) of the speed reduction mechanism 44 that is inserted onto and installed on the rotation shaft 24, which corresponds to the diameter D4 of the wheel attachment 24f and the outside diameter D5 of the serration 24j, can be only slightly larger than the diameters D1, D2, D6, D7 of the rotation shaft 24. Therefore, the diameters D4, D5 of the portion in the rotation shaft 24 on which the component 47 of the speed reduction mechanism 44 is installed (the diameter D4 of the wheel attachment 24f and the outside diameter D5 of the serration 24j) can be only slightly larger than the diameters D1, D2, D6, D7 of the other portions. Consequently, the material used when the rotation shaft 24 is manufactured may be thin. Thereby, only a small amount of the material need be used. Productivity is improved.

With the structure of the rotation shaft 24 described above, after the bearing fixing step has been performed, the component 47 the (worm wheel 47) of the speed reduction mechanism 44 can be inserted into the housing 51 and installed in the fixed positions 24f, 24j of the rotation shaft 24 (the wheel attachment 24f and the serration 24j) from the direction in which the rotation shaft 24 and the second bearing 62 are inserted into the housing 51 (the side having the other end 24b). Thus, the bearing fixing step and the speed reduction mechanism installing step can be performed from the same direction of the housing 51. As a result, the productivity of the motorized power steering device 10 can be further increased.

### [Embodiment 2]

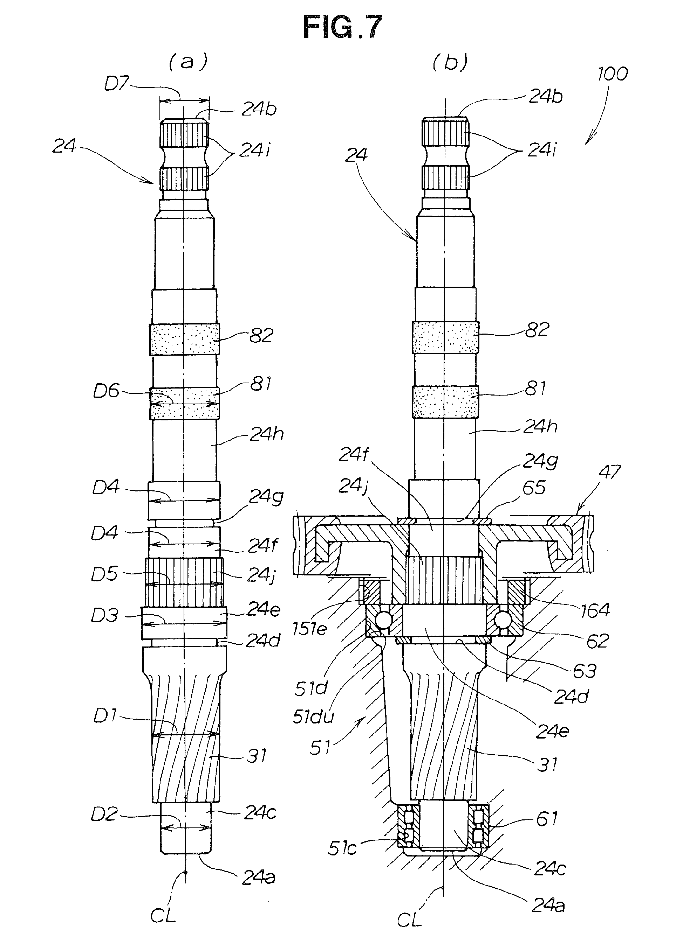

Next, a motorized power steering device 100 and a manufacturing method thereof according to Embodiment 2 will be described. FIG. 7(a) shows the rotation shaft 24. FIG. 7(b) shows a state in which the first bearing 61, the second bearing 62, and the worm wheel 47 have been mounted to the rotation shaft 24.

The motorized power steering device 100 for an automobile of Embodiment 2 is characterized in that the second stopper ring 64 shown in FIGS. 3 and 4(b) has been modified to a locknut 164 shown in FIG. 7(b), and other configurations are the same as the configurations shown in FIGS. 1 through 4 and are therefore not described.

In the internal peripheral surface of the housing 51, a female screw 151e is formed adjacent to the axially top part of the middle bearing hole 51d, as shown in FIG. 7(b). This female screw 151e is provided instead of the stopper ring fitting groove 51e shown in FIG. 4(b), and the locknut 164 is screwed therein. The inside diameter of the female screw 151e is larger than the diameter of the middle bearing hole 51d.

The locknut 164, which is an annular member through which the rotation shaft 24 can pass, has a well-known configuration. The external peripheral surface of the locknut 164 has a male screw that can be screwed into the female screw 151e.

The top end surface in the outer ring of the second bearing 62 is positioned by the locknut 164 (a bearing fixing member 164) which is screwed into the female screw 151e of the housing 51. Thus, the top and bottom end surfaces of the outer ring of the second bearing 62 are pressed between the ledge surface 51du and the locknut 164, and are thereby positioned and installed in the housing 51. By installing the locknut 164, which is disposed so as to be adjacent to the top end surface of the outer ring of the second bearing 62 (the end surface facing toward the top part opening 51a shown in FIG. 3), in the housing 51, the outer ring of the second bearing 62 can be fixed in the housing 51.

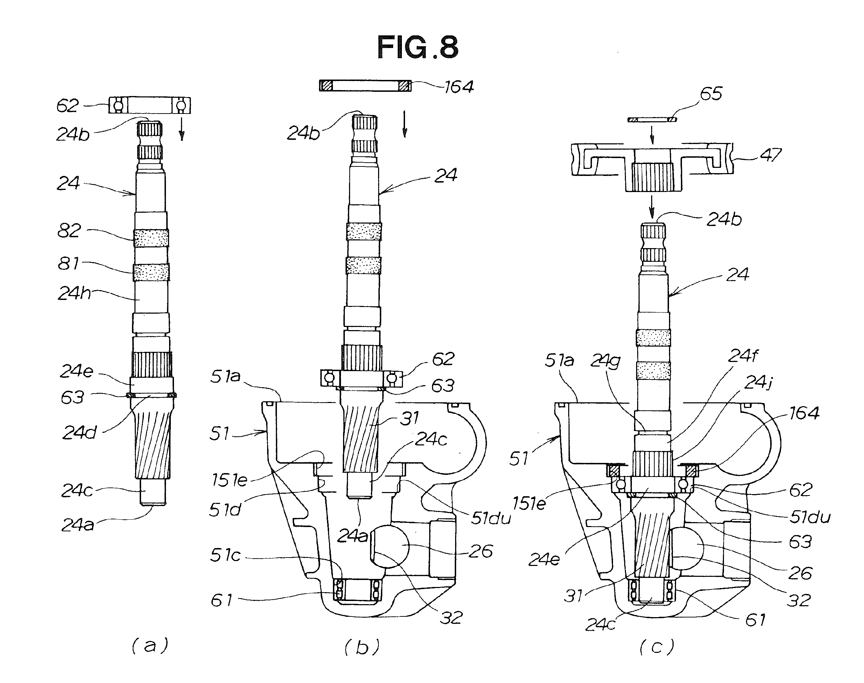

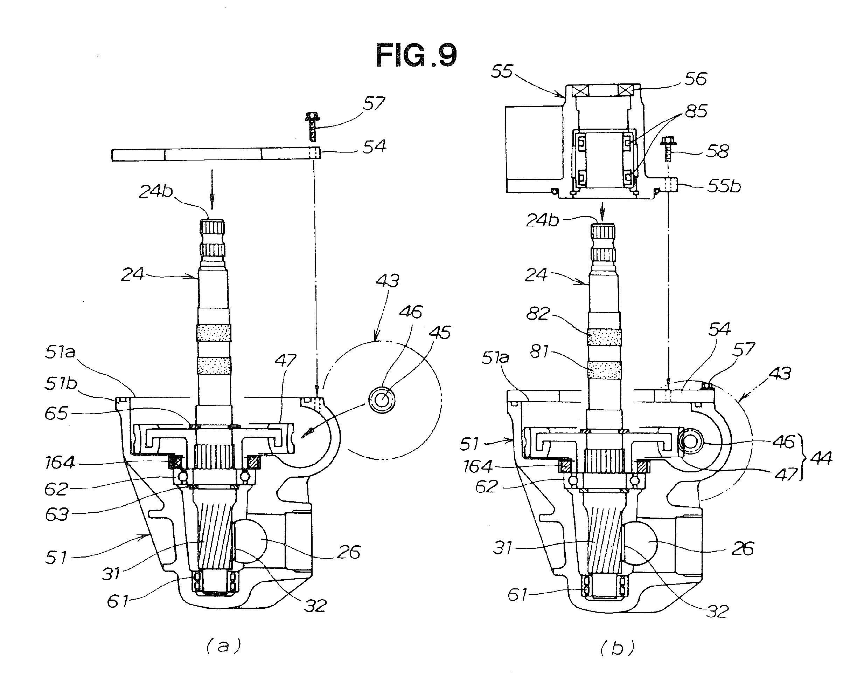

Next, the method of manufacturing the motorized power steering device 100 of Embodiment 2 will be described on the basis of FIGS. 8 and 9.

First, the rotation shaft 24 is prepared as shown in FIG. 8(a), and the magnetostrictive films 81, 82 are formed on the rotation shaft 24 (the magnetostrictive film forming step). The contents of this magnetostrictive film forming step are substantially the same as the magnetostrictive film forming step described in Embodiment 1 above (see FIG. 5(a)).

Next, the magnetostrictive films 81, 82 are endowed with anisotropy (the anisotropy endowment step). The contents of this anisotropy endowment step are substantially the same as the anisotropy endowment step described in Embodiment 1 above (see FIG. 5(a)).

The magnetostrictive film forming step and the anisotropy endowment step combined are referred to as the "magnetostrictive part setting step." The magnetostrictive films 81, 82 (magnetostrictive parts 81, 82) are provided to the rotation shaft 24 by carrying out the magnetostrictive part setting step.

Next, the first stopper ring 63 is fitted into and mounted in the bottom stopper ring fitting groove 24d of the rotation shaft 24, as shown in FIG. 8(a) (the first stopper ring attaching step).

Next, the second bearing 62 is inserted from the other end 24b of the rotation shaft 24 up to the position of the first stopper ring 63, as shown in FIG. 8(a). The second bearing 62 is mounted in the middle supported part 24e by pressure fitting (the second bearing attaching step, the bearing setting step). As a result, the second bearing 62 can be fitted and set (installed) in a fixed position of the rotation shaft 24.

Next, the first bearing 61 is mounted by being fitted with the bottom bearing hole 51c of the housing 51, as shown in FIG. 8(b) (the first bearing attaching step). As a result, the first bearing 61 is disposed in a fixed position in the housing 51. The first bearing attaching step may optionally be performed before the first stopper ring attaching step or the second bearing attaching step.

Next, the rotation shaft 24 is inserted from the side having the one end 24a into the housing 51 through the top part opening 51a, as shown in FIG. 8(b). The underside supported part 24c of the rotation shaft 24 is then fitted into the inner ring of the first bearing 61, and the second bearing 62 is fitted into the middle bearing hole 51d of the housing 51 (the shaft attaching step). Before this shaft attaching step is performed, the rack shaft 26 is installed in the housing 51 (the rack installing step). Therefore, the shaft attaching step is performed while the pinion 31 is meshed with the rack shaft 26.

Within the shaft attaching step, the step of inserting the rotation shaft 24 and the second bearing 62 into the housing 51 and disposing the rotation shaft 24 and second bearing 62 in internal fixed positions in the housing 51 is referred to as the "shaft setting step."

Next, the locknut 164 is inserted into the housing 51 through the top part opening 51a, as shown in FIG. 8(b). The locknut 164 is screwed into and mounted in the female screw 151e of the housing 51 (the locknut attaching step, the bearing fixing step). As a result, the second bearing 62 is positioned relative to the housing 51. This installing step is shown in FIG. 8(c). In other words, the top and bottom ends of the outer ring of the second bearing 62 are pressed between the ledge surface 51du and the locknut 164 and thereby positioned and installed in the housing 51. Thus, the locknut 164 disposed on the top end surface side of the second bearing 62 is installed in the housing 51, whereby the outer ring of the second bearing 62 is fixed in the housing 51.

The bearing setting step, the shaft setting step, and the bearing fixing step combined are referred to as the "shaft mounting step." In other words, this shaft mounting step is a step for rotatably mounting the rotation shaft 24 in the housing 51.

Next, the worm wheel 47 is inserted onto the rotation shaft 24 from the other end 24b of the rotation shaft 24 as shown in FIG. 8(c), the fitting hole of the worm wheel 47 is fitted on the wheel attachment 24f, and the worm wheel 47 is connected to the serration 24j (the wheel attaching step, the speed reduction mechanism installing step). The contents of this wheel attaching step are substantially the same as the wheel attaching step shown in FIG. 5(c).

Next, the third stopper ring 65 is fitted and mounted in the top stopper ring fitting groove 24g of the rotation shaft 24, as shown in FIG. 8(c) (the third stopper ring attaching step). As a result, the worm wheel 47 is positioned and installed in the fixed positions 24f, 24j of the rotation shaft 24(the wheel attachment 24f and the serration 24j). This installed state is shown in FIG. 9(a).

The rotation shaft 24 is positioned relative to the housing 51 by the second bearing 62, the first stopper ring 63, the locknut 164, the third stopper ring 65, and the worm wheel 47, and as a result, the rotation shaft 24 is restrained from moving in the axial longitudinal direction relative to the housing 51. Thus, the rotation shaft 24 is fixed in a fixed position in the housing 51 via the first and second bearings 61, 62.

Next, the worm 46 is inserted into the housing 51, combined with the worm wheel 47, and rotatably mounted in the housing 51, as shown in FIG. 9(a). The electric motor 43 is then installed in the housing 51 and the motor shaft of the electric motor 43 is connected to the worm shaft 45 (the speed reduction mechanism-motor assembling step).

Next, the middle fixing member 54 is laid over the flange 51b of the housing 51 and mounted by the bolt 57, as shown in FIG. 9(a) (the middle fixing member installing step). When the result is shown in FIG. 9(b), the top half of the rotation shaft 24 protrudes upward from the top part opening 51a.

Next, the sensor housing 55 in which the coils 85, 85 (the detector 83 shown in FIG. 3) have been installed in advance is inserted onto the rotation shaft 24 from the other end 24b of the rotation shaft 24, laid over the middle fixing member 54, and mounted by the bolt 58, as shown in FIG. 9(b) (the torque sensor assembling step). The result is shown in FIG. 3.

Next, the rack guide 70 is installed in the housing 51 as shown in FIG. 3 (the rack guide installing step). Finally, the tie rods 27, 27 are installed at both ends of the rack shaft 26, their peripheries are covered by the dust seal boots 53, 53, and the assembly work is completed, as shown in FIG. 2 (the rack shaft end treatment step).

In Embodiment 2, similar to Embodiment 1 described above, the middle fixing member installing step, the torque sensor assembling step, the rack guide installing step, and the rack shaft end treatment step may be performed in any stage as long as they are performed after the third stopper ring attaching step.

The description of Embodiment 2 above is summarized as follows.

In Embodiment 2, similar to Embodiment 1, when the rotation shaft 24 is rotatably mounted in the housing 51, i.e., when the shaft mounting step is performed, the speed reduction mechanism 44 has not been installed on the rotation shaft 24. The worker can perform the installation work while sufficiently observing the position where the rotation shaft 24 is mounted on the housing 51. Therefore, since the installation work can be performed easily and quickly, workability can be increased. As a result, the productivity of the motorized power steering device 100 can be increased.

In Embodiment 2, similar to Embodiment 1, the inner ring of the second bearing 62 is fitted in a fixed position of the rotation shaft 24 (the bearing setting step), the rotation shaft 24 and the second bearing 62 are then inserted in the housing 51 and disposed in an internal fixed position in the housing 51 (the shaft setting step), and the outer ring of the second bearing 62 is then fixed to the housing 51 (the bearing fixing step). The speed reduction mechanism 44 is installed on the rotation shaft 24 subsequent to these steps (the speed reduction mechanism installing step).

Thus, the rotation shaft 24 and the second bearing 62 fitted with the rotation shaft 24 are disposed in a fixed position in the housing 51, and when the outer ring of the second bearing 62 is fixed to the housing 51 by the bearing fixing member 164 (the locknut 164), the speed reduction mechanism 44 has not been installed on the rotation shaft 24. When the rotation shaft 24, the second bearing 62, and the bearing fixing member 164 are mounted in the housing 51, the worker can perform the installation work while sufficiently observing these members and mounting positions. Therefore, since the installation work can be performed easily and quickly, workability can be increased. As a result, the productivity of the motorized power steering device 100 can be increased.

In Embodiment 2, during the bearing fixing step, the bearing fixing member 164, which is disposed so as to be adjacent to the top end surface in the outer ring of the second bearing 62 that faces toward the opening 51a (the top part opening 51a) of the housing 51, is installed in the housing 51. As a result, the outer ring of the second bearing 62 is fixed to the housing 51. Therefore, the worker can install the bearing fixing member 164 in the housing 51 from the opening 51a side of the housing 51 while sufficiently observing the bearing fixing member 164. Consequently, the work of installing the second bearing 62 in the housing 51 using the bearing fixing member 164 can be performed easily and quickly.

In Embodiment 2, the bearing fixing member 164 is constituted of a locknut. The installation work is simple, merely due to the locknut 164 being fitted in the female screw 151e formed in the housing 51.

Embodiment 2 has the same actions and effects as Embodiment 1 due to having the magnetostrictive part setting step of providing the magnetostrictive parts 81, 82 to the rotation shaft 24 before the bearing setting step is performed.

In the present invention, the rotation shaft 24 is not limited to a configuration in which the first stopper ring 63 is mounted in the bottom stopper ring fitting groove 24d, and the rotation shaft 24 may have a configuration in which the second bearing 62 inserted onto the rotation shaft 24 from the other end 24b of the rotation shaft 24 can be positioned in a fixed position 24e (the middle supported part 24e) of the rotation shaft 24. For example, the configuration may have a flange provided to the external peripheral surface of the rotation shaft 24 in place of the first stopper ring 63.

The first bearing 61 and the second bearing 62 are not limited to roller bearings and may be sliding bearings.

The magnetostrictive parts 81, 82 are preferably parts that undergo changes in their magnetic characteristics due to the previously described steering torque added to the rotation shaft 24, and are not limited to magnetostrictive films.

### INDUSTRIAL APPLICABILITY

The motorized power steering device 10 manufactured by the manufacturing method of the present invention is suitable for use in a case in which the electric motor 43 generates auxiliary torque in accordance with steering torque, and this auxiliary torque is transmitted to the steering system 20 via the speed reduction mechanism 44.

### REFERENCE SIGNS LIST

- 10: Motorized power steering device
- 21: Steering wheel
- 24: Rotation shaft
- 41: Steering torque sensor (magnetostrictive torque sensor)
- 43: Electric motor
- 44: Speed reduction mechanism
- 46: Worm
- 47: Worm wheel
- 62: Bearing (second bearing)
- 51e: Fitting part (stopper ring fitting groove, fitting groove)
- 64: Bearing fixing member (second stopper ring)
- 81, 82: Magnetostrictive parts (magnetostrictive films)
- 151e: Female screw
- 164: Bearing fixing member (locknut)

## Claims

1. A method of manufacturing a motorized power steering device wherein a steering torque transmitted from a steering wheel to a rotation shaft is detected by a steering torque sensor when the steering wheel is steered, and an additional torque generated by an electric motor in accordance with the detected steering torque is transmitted to the rotation shaft via a speed reduction mechanism, the method comprising the steps of:
rotatably mounting the rotation shaft in a housing having a top part opening; and
then, installing the speed reduction mechanism on the rotation shaft.

2. The method of claim 1, wherein the step of rotatably mounting the rotation shaft comprises the steps of:
fitting an inner ring of a bearing to a fixed position of the rotation shaft;
inserting the rotation shaft and the bearing into the housing and disposing the rotation shaft and the bearing in an interior fixed position in the housing; and
fixing an outer ring of the bearing to the housing.

3. The method of claim 2, wherein the step of fixing the outer ring comprises fixing the outer ring of the bearing to the housing by the installation, in the housing, of a bearing fixing member, which is disposed so as to be adjacent to an end surface of the outer ring of the bearing facing toward the top part opening of the housing.

4. The method of claim 3, wherein the bearing fixing member comprises a member installed in the housing by being fitted with a fitting part formed in the housing.

5. The method of claim 4, wherein the fitting part comprises a fitting groove formed in the housing, and the bearing fixing member comprises a stopper ring which fits with the fitting groove.

6. The method of claim 3, wherein the bearing fixing member comprises a locknut installed in the housing by being screwed into a female screw formed in the housing.

7. The method of claim 1, wherein the steering torque sensor comprises a magnetostrictive torque sensor having magnetostrictive parts in which magnetic characteristics change due to the steering torque applied to the rotation shaft, and
the method further comprises the step of providing the magnetostrictive parts to the rotation shaft before the step of rotatabvly mounting the rotation shaft.
